# EUROPEAN PATENT APPLICATION

(11) **EP 4 131 088 A1**
(43) Date of publication of application: **08.02.2023**
(21) Application number: 20926427.4
(22) Date of filing: 24.03.2020
(51) Int. Cl.: G06N 20/00

(54) **MACHINE LEARNING MODEL TRAINING METHOD, ELECTRONIC DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN); ZHANG, Zhi, Dongguan, Guangdong 523860 (CN)
(74) Representative: Taor, Simon Edward William
(86) International application number: PCT/CN2020/080787
(87) International publication number: WO 2021/189225

(57) **Abstract**

Disclosed is a machine learning model training method. The method comprises: a first node sending first indication information, wherein the first indication information is used for a second node to determine a first quantization policy, and the first quantization policy is used for determining a parameter and/or output result of a machine learning model. Further disclosed are another machine learning model training method, an electronic device and a storage medium.

## Description

### TECHNICAL FIELD

This application relates to the field of wireless communication technology, and in particular to a method for training machine learning model, an electronic device and a storage medium.

### BACKGROUND

In the process of training a machine learning model, especially in the process of training a neural network model, how to improve the system performance of the neural network model is a problem that needs to be solved.

### SUMMARY

Embodiments of the application provide a method for training machine learning model, an electronic device, and a storage medium, which can improve the system performance of the neural network model.

According to a first aspect, some embodiments of the application provide a method for training a machine learning model, including: sending, by a first node, first indication information, where the first indication information is used by a second node for determining a first quantization strategy, and the first quantization strategy is used for determining a parameter and/or an output result of the machine learning model.

According to a second aspect, some embodiments of the application provide a method for training a machine learning model, including: receiving, by a second node, first indication information; and
determining, by the second node, a first quantization strategy according to the first indication information, where the first quantization strategy is used by the second node for determining a parameter and/or an output result of the machine learning model.

According to a third aspect, some embodiments of the application provide a first node, including: a first sending unit, configured to send first indication information, where the first indication information is used by a second node for determining a first quantization strategy, and the first quantization strategy is used for determining a parameter and/or an output result of the machine learning model.

According to a fourth aspect, some embodiments of the application provide a second node, including: a first receiving unit, configured to receive first indication information; and
a processing unit, configured to determine a first quantization strategy according to the first indication information, wherein the first quantization strategy is used by the second node for determining a parameter and/or an output result of the machine learning model.

According to a fifth aspect, some embodiments of the application provide a first node, including a processor and a memory configured to store a computer program executable on the processor, where the processor is configured to, when executing the computer program, implement steps of the method for training the machine learning model implemented by the first node as described above.

According to a sixth aspect, some embodiments of the application provide a second node, including a processor and a memory configured to store a computer program executable on the processor, where the processor is configured to, when executing the computer program, implement steps of the method for training the machine learning model implemented by the second node as described above.

According to a seventh aspect, some embodiments of the application provide a chip, including a processor configured to call and run a computer program from a memory, causing a device installed with the chip to implement the method for training the machine learning model implemented by the first node as described above.

According to an eighth aspect, some embodiments of the application provide a chip, including a processor configured to call and run a computer program from a memory, causing a device installed with the chip to implement the method for training the machine learning model implemented by the second node as described above.

According to a ninth aspect, some embodiments of the application provide a storage medium storing an executable program, where the executable program, when being executed by a processor, is used for implementing the method for training the machine learning model implemented by the first node as described above.

According to a tenth aspect, some embodiments of the application provide a storage medium storing an executable program, where the executable program, when being executed by a processor, is used for implementing the method for training the machine learning model implemented by the second node as described above.

According to an eleventh aspect, some embodiments of the application provide a computer program product, including computer program instructions that cause a computer to implement the method for training the machine learning model implemented by the first node as described above.

According to a twelfth aspect, some embodiments of the application provide a computer program product, including computer program instructions that cause a computer to implement the method for training the machine learning model implemented by the second node as described above.

According to a thirteenth aspect, some embodiments of the application provide a computer program that causes a computer to implement the method for training the machine learning model implemented by the first node as described above.

According to a fourteenth aspect, some embodiments of the application provide a computer program that causes a computer to implement the method for training the machine learning model implemented by the second node as described above.

According to the machine learning model training method, electronic device, and storage medium provided by the embodiments of the application, the first node sends the first indication information, the second node determines the first quantization strategy according to the first indication information, and the first quantization strategy is used for determining the parameter and/or output result of the machine learning model. In this way, quantization is performed on information transmitted between various nodes in the neural network model system by using the same quantization strategy and the parameter corresponding to the quantization strategy, thereby avoiding degradation of system performance caused by quantization of the information from multiple users using different quantization strategies and parameters. In addition, quantization strategies can be pre-defined or pre-configured according to different scenarios, thereby meeting various needs of the neural network model system for the quantization strategy.

### BRIEF DESCRIPTION OF THE DRAWINGS

FIG. 1 is a schematic diagram illustrating a basic structure of a simplified neural network model according to some embodiments of the application.
FIG. 2 is a schematic diagram illustrating a basic structure of a deep neural network model according to some embodiments of the application.
FIG. 3a is a schematic diagram illustrating a uniform quantization of samples according to some embodiments of the application.
FIG. 3b is a schematic diagram illustrating a non-uniform quantization of samples according to some embodiments of the application.
FIG. 4 is a schematic diagram illustrating a non-uniform parameter distribution of the neural network model according to some embodiments of the application.
FIG. 5 is a schematic diagram illustrating a training process of the neural network model based on federated learning according to some embodiments of the application.
FIG. 6 is a schematic diagram illustrating a coding and decoding process based on the quantization strategy according to some embodiments of the application.
FIG. 7 is a schematic diagram illustrating a structure of a communication system according to some embodiments of the application.
FIG. 8 is an optional flow chart of the machine learning model training method according to some embodiments of the application.
FIG. 9 is a detailed optional flow chart of the machine learning model training method according to some embodiments of the application.
FIG. 10 is another detailed optional flow chart of the machine learning model training method according to some embodiments of the application.
FIG. 11 is still another detailed optional flow chart of the machine learning model training method according to some embodiments of the application.
FIG. 12 is an optional block diagram of the first node according to some embodiments of the application.
FIG. 13 is an optional block diagram of the second node according to some embodiments of the application.
FIG. 14 is a schematic diagram illustrating a hardware structure of the electronic device according to some embodiments of the application.

### DETAILED DESCRIPTION

In order to have a more detailed understanding of the characteristics and technical content of some embodiments of the application, implementation of some embodiments of the application will be described in detail below with reference to the accompanying drawings. The attached drawings are for reference and explanation purposes only, and are not used to limit embodiments of the application.

Before describing some embodiments of the application in detail, a brief description of artificial intelligence is given as follows.

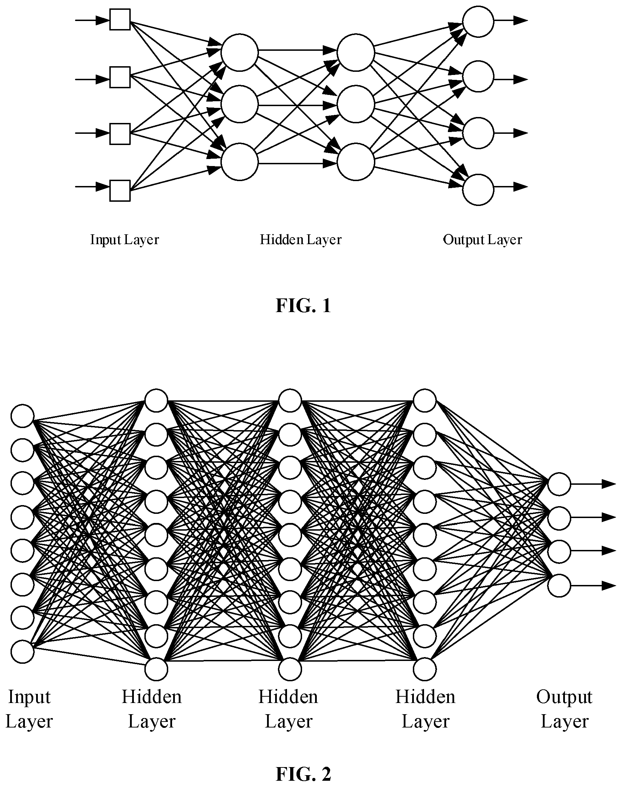

Artificial intelligence has become a new way for people to solve and deal with problems. For example, artificial intelligence based on neural networks has a wide range of applications. The basic structure of a simplified neural network model is shown in FIG. 1, which includes an input layer, a hidden layer and an output layer. The input layer is configured to receive data, the hidden layer is configured to process the data, and the output layer is configured to generate a calculation result of the neural network model.

With continuous development and research of the neural network model, a neural network deep learning algorithm is proposed. The basic structure of a deep neural network model is shown in FIG. 2. The deep neural network model includes multiple hidden layers, thereby enabling the deep neural network model to greatly improve data processing capabilities, so as to be widely used in pattern recognition, signal processing, optimized combination, and anomaly detection.

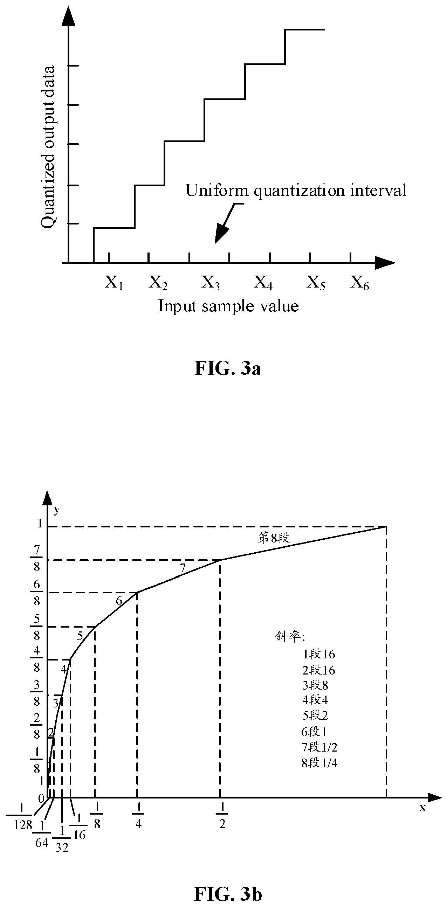

Typical quantization strategies include two types, namely uniform quantization and non-uniform quantization. Herein, uniform quantization is performed by dividing a value range of input signal at equal intervals. As shown in FIG. 3a, the abscissa represents input sample values (input signal), and the intervals between any two adjacent sample values are equal to each other. As to the non-uniform quantization, for example, in the value range of input signal, the small signal range is divided into more quantization levels, while the large signal range is divided into less quantization levels. The typical A-power non-uniform quantization is shown in FIG. 3b, and the abscissa represents the input sample values (input signal).

Parameter quantization is a necessary process in the system design, and the quantization strategy thereof is usually fixed or pre-agreed. However, a series of new system designs including, for example, the neural network model system, have appeared in large numbers. In particular, the pattern applicability and scenario applicability of some distributed neural network model systems are directly related to the quantization strategy. Therefore, it has not yet been clarified on how to determine the quantization strategy of system parameters, in order to enable the neural network model system to be widely and optimally applied.

With the introduction and wide application of deep neural network models, the number of parameters in a neural network model are often extremely large, for example, may reach several million or even hundreds of millions. Therefore, different quantization strategies will bring about great impact on the neural network model system.

Firstly, the bit number of quantization directly affects the size of the neural network model. For example, for a neural network type with one million parameters, whether 8-bit quantization or 64-bit quantization is used directly affects whether the size of the neural network model needs to be enlarged by 8 times.

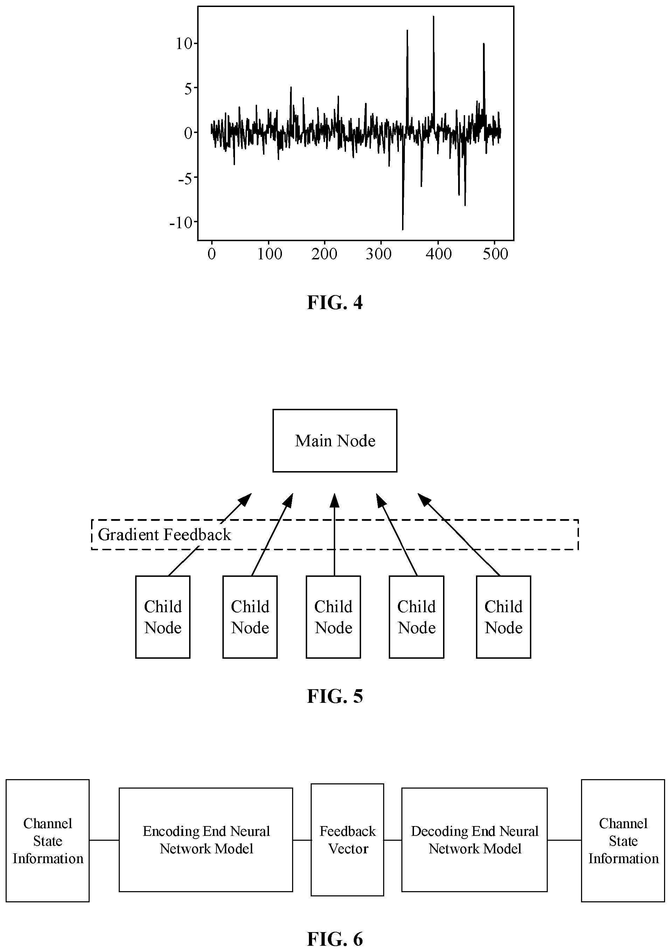

Secondly, the parameter quantization strategy (uniform quantization or non-uniform quantization) may also directly affect the performance and size of the neural network model. For example, when the parameters of the neural network model are uniformly distributed, uniform quantization is often better. If non-uniform quantization is used at this time, the quantization error of some parameters may be too large, thereby affecting the performance of the neural network model. For another example, the parameter distribution of the neural network model may be not uniform. As shown in FIG. 4, the abscissa represents the serial number of the sample, and the ordinate represents the value of the sample. In the set of small-value parameters, large-value parameters are less, and the effect of non-uniform quantization is often better. If uniform quantization is used at this time, relatively more bits are required to achieve the quantization accuracy for the small-value parameters, thereby expanding the size of the neural network model.

One way of neural network model training is "federated learning", which is characterized by distributing training sets on various child nodes during the training process of the neural network model. The training process of the neural network model based on federated learning is shown in FIG. 5, including three steps. First, local neural network models are generated by the child nodes and uploaded to a main node. Second, a global neural network model is generated by the main node according to all of the local neural network models and, then, transmitted to each child node. Finally, the child node continues a next training iteration by using the global neural network model, so as to complete the training of the neural network model under the cooperation of the main node and child nodes. Therefore, it is proposed that the child node and the main node may have the same understanding of the quantization strategy, model parameters and gradient information. When the multiple child nodes feed back the intermediate parameter information of the federated learning by using the same quantization strategy, it is further proposed that, in addition to unify the quantization strategy between the main node and the child nodes, the quantization strategy is consistent between the child nodes.

Moreover, in an application scenario of distributed encoding and decoding, the quantization strategy of the feedback vector may also be identically understood between the encoding end and the decoding end. As shown in FIG. 6, the encoding end converts the channel state information into the feedback vector by using a neural network model, and the decoding end converts the feedback vector into the channel state information by using a neural network model. In this system structure, the encoding end and the decoding end may belong to different nodes. Therefore, it is proposed that the encoding end and the decoding end have a consistent understanding of the quantization strategy adopted by the feedback vector, thereby avoiding failure of the codec collaboration.

In summary, it is very important for the neural network model system to determine the quantization strategy.

The technical solutions of some embodiments of the application may be applied to various communication systems, for example, global system of mobile communication (GSM) system, code division multiple access (CDMA) system, wideband code division multiple access (WCDMA) system, general packet radio service (GPRS), long term evolution (LTE) system, LTE frequency division duplex (FDD) system, LTE time division duplex (TDD) system, advanced long term evolution (LTE-A) system, new radio (NR) system, evolution system of NR system, LTE-based access to unlicensed spectrum (LTE-U) system, NR-based access to unlicensed spectrum (NR-U) system, universal mobile telecommunication system (UMTS), worldwide interoperability for microwave access (WiMAX) communication system, wireless local area networks (WLAN), wireless fidelity (WiFi), next-generation communication systems or other communication systems.

The system architectures and service scenarios described in some embodiments of the application are intended to more clearly illustrate the technical solutions of some embodiments of the application, and do not constitute a limitation on the technical solutions provided in some embodiments of the application. Those of ordinary skill in the art should understand that, with the evolution of network architectures and the emergence of new service scenarios, the technical solutions provided in the embodiments of the application are also applicable to similar technical problems.

The network device involved in some embodiments of the application may be a base station (e.g., NodeB, eNB or gNB), a new radio controller (NR controller), a centralized unit, a NR base station, a radio frequency remote module, a micro base station, a relay, a distributed unit, a transmission reception point (TRP), a transmission point (TP), or any other device. Embodiments of the application do not limit the specific technology and specific device form adopted by the network device. For the convenience of description, in some embodiments of the application, the above-mentioned devices that provide wireless communication functions for terminal devices are collectively referred to as the network device.

In some embodiments of the application, the terminal device may be any terminal. For example, the terminal device may be a user equipment for machine-type communication. That is to say, the terminal device may also be referred to as user equipment (UE), mobile station (MS), mobile terminal, terminal or the like. The terminal device communicates with one or more core networks via a radio access network (RAN). For example, the terminal device may be a mobile phone (or called a "cellular" phone), a computer with a mobile terminal or the like. For example, the terminal device may also be portable or pocket-sized, handheld, computer built-in or vehicle-mounted mobile devices that exchange voice and/or data with the wireless access network. There is no specific limitation in the embodiments of the application.

Optionally, the network device and the terminal device may be deployed on land, including indoor or outdoor, handheld or vehicle-mounted environment. They may also be deployed on water; or deployed on airborne aircraft, balloons, and satellites. Embodiments of the application do not limit the application scenarios of the network device and the terminal device.

Optionally, communication between the network device and the terminal device may be carried out through licensed spectrum, or through unlicensed spectrum, or through licensed spectrum and unlicensed spectrum at the same time. Communication between the network device and the terminal device may be carried out through the frequency spectrum below 7 gigahertz (GHz), or through the frequency spectrum above 7 GHz, or through the frequency spectrum below 7 GHz and the frequency spectrum above 7GHz at the same time. Embodiments of the application do not limit the spectrum resource used between the network device and the terminal device.

Generally, traditional communication systems support a limited number of connections and are easy for implementation. However, with the development of communication technology, mobile communication systems will not only support traditional communication, but also support, for example, device to device (D2D) communication, machine to machine (M2M) communication, machine type communication (MTC), vehicle to vehicle (V2V) communication, and the like. Some embodiments of the application may also be applied to these communication systems.

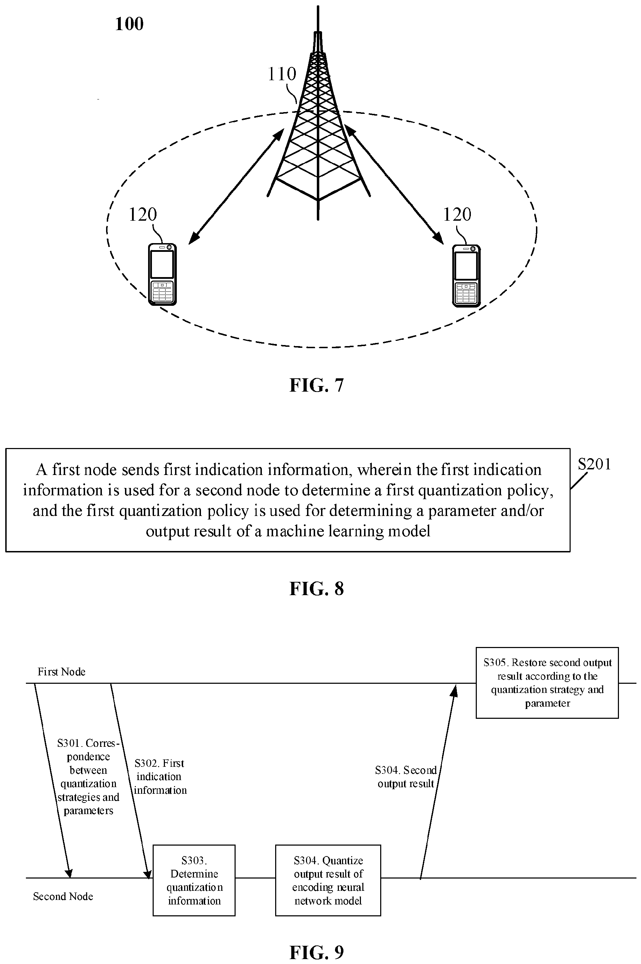

Exemplarily, a communication system 100 applied in some embodiments of the application is shown in FIG. 7. The communication system 100 includes a network device 110, which communicates with a terminal device 120 (or called a communication terminal or terminal). The network device 110 may provide communication coverage for a specific geographic area, and may communicate with terminal devices located within the coverage area. Optionally, the network device 110 may be a base transceiver station (BTS) in GSM system or CDMA system, a NodeB (NB) in WCDMA system, or an evolutional Node B (eNB or eNodeB) in LTE system, or a wireless controller in cloud radio access network (CRAN). Alternatively, the network device may be a mobile switching center, a relay station, an access point, a vehicle-mounted device, a wearable device, a hub, a switch, a bridge, a router, a network-side device in 5G network, a network device in the future evolution of public land mobile network (PLMN), or the like.

The communication system 100 also includes at least one terminal device 120 located within the coverage area of the network device 110. The "terminal device(s)" used here is in communication, but is not limited to, via wired lines, such as via public switched telephone networks (PSTN), digital subscriber line (DSL), digital cable, and direct cable connection; and/or via another data connection/network; and/or via a wireless interface, such as cellular networks, wireless local area networks (WLAN), digital TV networks (e.g., DVB-H networks), satellite networks, AM- FM broadcast transmitter; and/or via an apparatus of another terminal device that is configured to receive/send communication signals; and/or via Internet of things (IoT) equipment. The terminal device configured to communicate via the wireless interface may be referred to as a "wireless communication terminal", a "wireless terminal" or a "mobile terminal". Examples of mobile terminals include, but are not limited to, satellite or cellular phones; personal communications system (PCS) terminals that combine cellular radio phones with data processing, fax, and data communication capabilities; a personal digital assistant (PDA) that may be provided with function of radio phones, pagers, Internet/intranet access, web browser, memo pad, calendar, and/or global positioning system (GPS) receiver; and conventional laptop and/or palmtop receivers or other electronic devices including radio telephone transceivers. The terminal device may refer to access terminals, user equipment (UE), user units, user stations, mobile stations, mobile sites, remote stations, remote terminals, mobile equipment, user terminals, terminals, wireless communication equipment, user agents, or user devices. The access terminal may be a cellular phone, a cordless phone, a session initiation protocol (SIP) phone, a wireless local loop (WLL) station, a PDA, a handheld device or a computing device with wireless communication function, a processing device, an in-vehicle device or a wearable device connected to wireless modems, a terminal device in 5G networks, a terminal device in the future evolution of PLMN, or the like.

Optionally, device to device (D2D) communication is performed between the terminal devices 120.

Optionally, the 5G system or 5G network may also be referred to as a new radio (NR) system or NR network.

FIG. 7 exemplarily shows one network device and two terminal devices. Optionally, the communication system 100 may include multiple network devices and the coverage of each network device may include other numbers of terminal devices, which are not limited in the embodiments of the application.

Optionally, the communication system 100 may further include other network entities such as a network controller and a mobility management entity, which are not limited in the embodiments of the application.

It should be understood that the devices with communication functions in the network/system according to some embodiments of the application may be referred to as communication devices. Taking the communication system 100 shown in FIG. 7 as an example, communication devices may include the network device 110 and the terminal device 120 provided with communication function. The network device 110 and the terminal device 120 may be the specific devices described above, which will not be repeated here. The communication device may also include other devices in the communication system 100, such as network controllers, mobility management entities and other network entities, which are not limited in the embodiments of the application.

An optional flow of the machine learning model training method according to some embodiments of the application, as shown in FIG. 8, includes the following steps.

In step S201, a first node sends first indication information, where the first indication information is used by the second node for determining a first quantization strategy, and the first quantization strategy is used for determining a parameter and/or an output result of the machine learning model.

In some embodiments, the first node and the second node may be two nodes located in the same neural network model system. The first quantization strategy may be predefined or pre-configured.

In some embodiments, the correspondence between the first quantization strategy and a first parameter is pre-configured, or the correspondence between the first quantization strategy and the first parameter is defined in a protocol. The first node sends the first indication information to the second node, and the second node firstly determines the first quantization strategy according to the first indication information, and then determine the first parameter corresponding to the first quantization strategy according to the correspondence between the first quantization strategy and the first parameter as pre-configured or defined in the protocol.

In some other embodiments, the first node further sends second indication information to the second node, where the second indication information is used by the second node for determining the first parameter corresponding to the first quantization strategy.

In some embodiments, the first indication information and the second indication information may be carried in the same signaling, or may be carried in different signaling. For example, the first indication information and the second indication information may be carried in any one of: service layer data, a broadcast message, a radio resource control (RRC) message, a media access control (MAC) control element (CE), a physical downlink control channel (PDCCH) and a downlink control information (DCI).

In some embodiments, the first quantization strategy is predefined, or the first quantization strategy is pre-configured; the first quantization strategy includes a uniform quantization strategy or a non-uniform quantization strategy; and the first parameter includes at least one of: a quantization range, a quantization level, a quantization bit number, and a quantization base number and of a non-uniform power quantization.

In some embodiments, the first node includes: a terminal device or a network device; and the second node includes: a terminal device or a network device. Therefore, the first indication information may be sent by the network device to the terminal device, or may be sent by the network device to the network device. Alternatively, the first indication information may also be sent by the terminal device to the network device. Alternatively, the first quantization strategy may be sent by the terminal device to the network device.

An optional application scenario of the machine learning model training method according to some embodiments of the application is as follows. In the machine learning model, the first node sends the first quantization strategy to the second node; the second node performs quantization on to-be-output information according to the first quantization strategy and the first parameter corresponding to the first quantization strategy, and sends the quantized information to the first node; and the first node restores the received information according to the first quantization strategy and the first parameter, so as to determine the parameter and/or the output result of the machine learning model.

Taking a distributed neural network model as an example, a detailed optional processing flow of the machine learning model training method according to some embodiments of the application, as shown in FIG. 9, includes the following steps.

In step S301, the first node configures the correspondence between the quantization strategies and the parameters for the second node.

In some embodiments, the first node sends multiple quantization strategies and parameters corresponding to respective quantization strategies to the second node in advance.

In some embodiments, the quantization strategies include uniform quantization or non-uniform quantization. The parameters corresponding to the quantization strategies may include at least one of: a quantization range, a quantization level, a quantization base number of non-uniform power quantization, and a quantization bit number.

In step S302, the first node sends first indication information to the second node.

In some embodiments, the first indication information sent by the first node to the second node indicates a quantization strategy for the second node to use.

In some embodiments, the first node indicates the first quantization strategy through a RRC signaling.

In step S303, the second node determines quantization information.

In some embodiments, the quantization information includes a quantization strategy and a parameter corresponding to the quantization strategy.

For example, in some embodiments of the application, the first node indicates the non-uniform quantization through a RRC signaling. The second node determines, according to a pre-configured correspondence between the quantization strategies and the parameters corresponding to the quantization strategies, that the quantization range of parameters corresponding to the non-uniform quantization is a data range from A to B, the quantization bit number is 4 bits, the quantization level is 16, and the quantization base number is 2.

In step S304, the second node quantizes the output result of the encoding neural network model according to the determined quantization information, and then sends it to the first node.

With reference to FIG. 6, taking the channel state information as an example, a first output result may be obtained based on the channel state information through the encoding neural network model, the second node performs non-uniform quantization on the first output result for the data ranging from A to B, with the quantization bit number being 4 bits, the quantization level being 16, and the quantization base number being 2. After quantization of the first output result, a second output result is obtained and sent to the first node.

In step S305, the first node performs restoration on the second output result according to the quantization strategy and the corresponding parameter.

In some embodiments, the first node performs restoration on the second output result according to the quantization strategy and the corresponding parameter, so as to obtain the first output result of the encoding neural network model, inputs the first output result to the decoding neural network model, and obtains the channel state information by using the decoding neural network.

In some embodiments of the application, the first node is a network device, and the second node is a terminal device. Alternatively, the first node may be a terminal device, and correspondingly, the second node may be a network device.

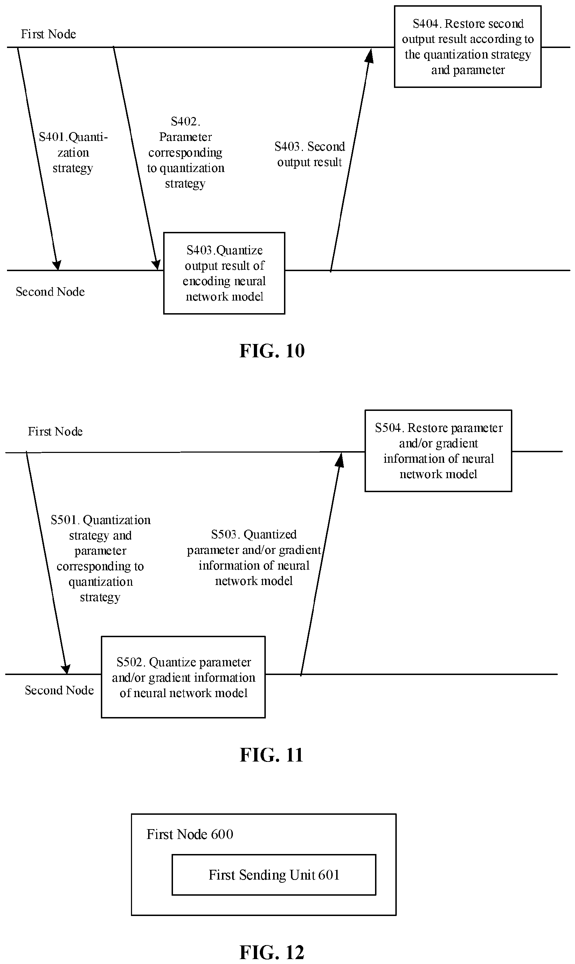

Taking the distributed neural network model as an example, another detailed optional processing flow of the machine learning model training method according to some embodiments of the application, as shown in FIG. 10, includes the following steps.

In step S401, the first node indicates the quantization strategy to the second node.

In some embodiments, the quantization strategy includes uniform quantization or non-uniform quantization.

In step S402, the first node indicates the parameter corresponding to the quantization strategy to the second node.

In some embodiments, the parameter corresponding to the quantization strategy includes at least one of: a quantization range, a quantization level, a quantization base number of non-uniform power quantization, and a quantization bit number.

In step S403, the second node quantizes the output result of the encoding neural network model according to the quantization strategy and the parameter corresponding to the quantization strategy, and then sends it to the first node.

With reference to FIG. 6, taking the channel state information as an example, a first output result may be obtained based on the channel state information through the encoding neural network model, the second node performs non-uniform quantization on the first output result for the data ranging from A to B, with the quantization bit number being 4 bits, the quantization level being 16, and the quantization base number being 2. After quantization of the first output result, a second output result is obtained and sent to the first node.

In step S404, the first node performs restoration on the second output result according to the quantization strategy and parameter.

In some embodiments, the first node performs restoration on the second output result according to the quantization strategy and the corresponding parameter, so as to obtain the first output result of the encoding neural network model, inputs the first output result to the decoding neural network model, and obtains the channel state information by using the decoding neural network.

In some embodiments of the application, the first node is a network device, and the second node is a terminal device. Alternatively, the first node may be a terminal device, and correspondingly, the second node may be a network device.

Taking federated learning as an example, another optional detailed processing flow of the machine learning model training method according to some embodiments of the application, as shown in FIG. 11, includes the following steps.

In step S501, the first node indicates the quantization strategy and the parameter corresponding to the quantization strategy to the second node.

In some embodiments, the first node indicates, by means of broadcasting, the quantization strategy and the parameter corresponding to the quantization strategy from multiple pre-configured quantization strategies. Alternatively, the first node may directly indicate the quantization strategy and the parameter corresponding to the quantization strategy to the second node.

With reference to the schematic diagram of federated learning shown in FIG. 6, the quantization strategy and the parameter corresponding to the quantization strategy are used for determining a quantization manner of the parameter and/or gradient information of the neural network model determined by the second node (child node). In other words, in addition to determining the quantization manner of the parameter of the neural network model, the quantization strategy and the parameter corresponding to the quantization strategy may be further used for determining the quantization manner of the gradient information of the neural network model. For example, the quantization strategy indicated by the first node is uniform quantization, with the quantization range including data ranging from A to B, the quantization bit number being 8 bits, and the quantization level being 256.

In step S502, the second node quantizes the parameter and/or gradient information of the neural network model according to the quantization strategy and the parameter corresponding to the quantization strategy indicated by the first node.

In step S503, the second node sends the quantized parameter and/or gradient information of the neural network model to the first node.

In step S504, the first node restores the parameter and/or gradient information of the neural network model according to the quantization strategy and the parameter corresponding to the quantization strategy.

In some embodiments, the first node performs, according to the quantization strategy and the parameter corresponding to the quantization strategy that are indicated to the second node, restoration on the parameter and/or gradient information of the neural network model quantized and sent by the second node, so as to obtain the parameter and/or gradient information of the neural network model that are to be used for training the machine learning model based on federated learning.

In some embodiments of the application, the first node is a network device, and the second node is a terminal device. Alternatively, the first node may be a terminal device, and correspondingly, the second node may be a network device.

In some embodiments of the application, quantization is performed on information transmitted between various nodes in the neural network model system by using the same quantization strategy and the parameter corresponding to the quantization strategy, thereby avoiding degradation of system performance caused by quantization of the information from multiple users using different quantization strategies and parameters. In addition, quantization strategies can be pre-defined or pre-configured according to different scenarios, thereby meeting various needs of the neural network model system for the quantization strategy.

It should be understood that in the embodiments of the application as described above, the size of the sequence number does not mean the order of execution, and the execution order of each step should be determined by its function and internal logic, and should not constitute any limitation on the embodiments of the application.

In order to implement the above-mentioned machine learning model training method, some embodiments of the application provide a first node. An optional block diagram of the first node 600, as shown in FIG. 12, includes a first sending unit 601.

The first sending unit 601 is configured to send first indication information, where the first indication information is used by a second node for determining a first quantization strategy, and the first quantization strategy is used for determining a parameter and/or an output result of the machine learning model.

In some embodiments, the first sending unit 601 is further configured to send second indication information, and the second indication information is used for determining a first parameter corresponding to the first quantization strategy.

In some embodiments, the first parameter includes at least one of: a quantization range, a quantization level, a quantization base number of non-uniform power quantization, and a quantization bit number.

In some embodiments, the second indication information is carried in any one of: service layer data, a broadcast message, a RRC message, a MAC CE, a PDCCH, and a DCI.

In some embodiments, the first parameter corresponding to the first quantization strategy is defined in a protocol; or, the first parameter corresponding to the first quantization strategy is pre-configured.

In some embodiments, the first quantization strategy includes a uniform quantization strategy or a non-uniform quantization strategy.

In some embodiments, the first quantization strategy is predefined; or, the first quantization strategy is pre-configured.

In some embodiments, the first indication information is carried in any one of: service layer data, a broadcast message, a RRC message, a MAC CE, a PDCCH, and a DCI.

In some embodiments, the first node includes a terminal device or a network device.

In some embodiments, the second node includes a terminal device or a network device.

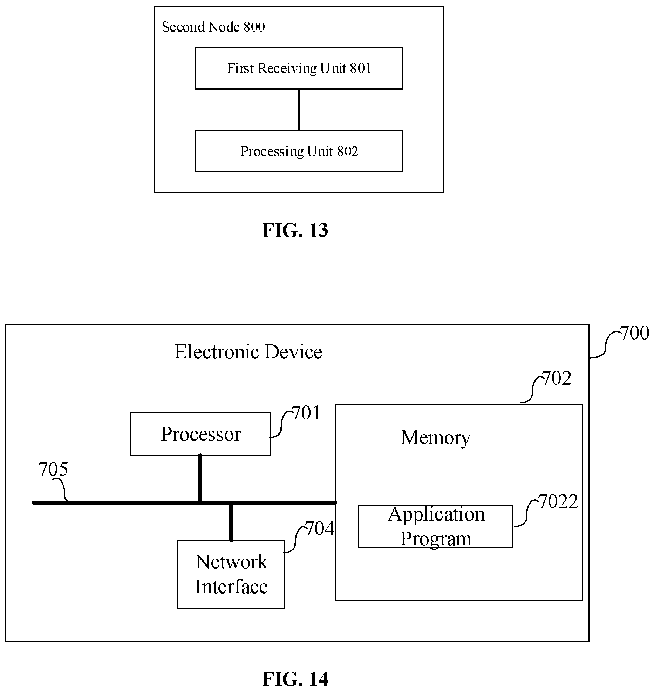

In order to implement the above-mentioned machine learning model training method, some embodiments of the application provide a second node. An optional block diagram of the second node 800, as shown in FIG. 13, includes a first receiving unit 801 and a processing unit 802.

The first receiving unit 801 is configured to receive first indication information.

The processing unit 802 is configured to determine a first quantization strategy according to the first indication information, where the first quantization strategy is used by the second node for determining a parameter and/or an output result of the machine learning model.

In some embodiments, the first receiving unit 801 is further configured to receive second indication information, where the second indication information is used by the second node for determining a first parameter corresponding to the first quantization strategy.

In some embodiments, the first parameter includes at least one of: a quantization range, a quantization level, a quantization base number of non-uniform power quantization, and a quantization bit number.

In some embodiments, the second indication information is carried in any one of: service layer data, a broadcast message, a RRC message, a MAC CE, a PDCCH, and a DCI.

In some embodiments, the processing unit 802 is further configured to determine the first parameter corresponding to the first quantization strategy according to a correspondence between a quantization strategy and the first parameter.

In some embodiments, the correspondence between the quantization strategy and the first parameter is defined in a protocol; or, the correspondence between the quantization strategy and the first parameter is pre-configured.

In some embodiments, the first quantization strategy includes a uniform quantization strategy or a non-uniform quantization strategy.

In some embodiments, the first quantization strategy is predefined; or, the first quantization strategy is pre-configured.

In some embodiments, the first indication information is carried in any one of: service layer data, a broadcast message, a RRC message, a MAC CE, a PDCCH, and a DCI.

In some embodiments, the first node includes a terminal device or a network device.

In some embodiments, the second node includes a terminal device or a network device.

Some embodiments of the application also provides a first node, including a processor and a memory configured to store a computer program executable on the processor, where the processor is configured to, when executing the computer program, implement the steps of the machine learning model training method performed by the first node as described above.

Some embodiments of the application further provides a second node, including a processor and a memory configured to store a computer program executable on the processor, where the processor is configured to, when executing the computer program, implement the steps of the machine learning model training method performed by the second node as described above.

Some embodiments of the application also provides a chip, including a processor, configured to call and run a computer program from a memory, thereby causing a device installed with the chip to implement the machine learning model training method performed by the first node as described above.

Some embodiments of the application also provides a chip, including a processor, configured to call and run a computer program from a memory, thereby causing a device installed with the chip to implement the machine learning model training method performed by the second node as described above.

Some embodiments of the application also provides a storage medium storing an executable program, where the executable program, when being executed by a processor, is used for implementing the machine learning model training method performed by the first node as described above.

Some embodiments of the application also provides a storage medium storing an executable program, where the executable program, when being executed by a processor, is used for implementing the machine learning model training method performed by the second node as described above.

Some embodiments of the application also provides a computer program product, including computer program instructions, which cause a computer to implement the machine learning model training method performed by the first node as described above.

Some embodiments of the application also provides a computer program product, including computer program instructions, which cause a computer to implement the machine learning model training method performed by the second node as described above.

Some embodiments of the application also provides a computer program that enables a computer to implement the machine learning model training method performed by the first node as described above.

Some embodiments of the application also provides a computer program that enables a computer to implement the machine learning model training method performed by the second node as described above.

FIG. 14 is a schematic diagram illustrating a hardware structure of the electronic device (the first node or the second node) according to some embodiments of the application. The electronic device 700 includes at least one processor 701, a memory 702, and at least one network interface 704. The various components in the electronic device 700 are coupled together through a bus system 705. It should be understood that the bus system 705 is configured to implement connection and communication between these components. In addition to a data bus, the bus system 705 may further include a power bus, a control bus, and a status signal bus. However, for the sake of clear description, various buses are marked as the bus system 705 in FIG. 14.

It should be understood that the memory 702 may be a volatile memory or a non-volatile memory, and may also include both volatile and non-volatile memory. In some embodiments, non-volatile memory may include ROM, programmable read-only memory (PROM), erasable programmable read-only memory (EPROM), electrically erasable programmable read-only memory (EEPROM), ferromagnetic random access memory (FRAM), flash memory, magnetic surface memory, optical disk, or compact disc read-only memory (CD-ROM); where the magnetic surface memory may be a disk storage or a tape storage. The volatile memory may include random access memory (RAM), which is used as an external cache. By way of exemplary but not restrictive description, many forms of RAM are available, for example, static random access memory (SRAM), synchronous SRAM (SSRAM), dynamic random access memory (DRAM), synchronous DRAM (SDRAM), double data rate SDRAM (DDRSDRAM), enhanced SDRAM (ESDRAM), sync-link DRAM (SLDRAM), direct Rambus RAM (DRRAM). The memory 702 described in some embodiments of the application is intended to include, but is not limited to, these and any other suitable types of memory.

The memory 702 in some embodiments of the application is configured to store various types of data to support the operation of the electronic device 700. Examples of such data include any computer program operatable on the electronic device 700, such as the application program 7022. The program for implementing the method according to some embodiments of the application may be included in the application program 7022.

The method disclosed in the foregoing embodiments of the application may be applied to the processor 701 or implemented by the processor 701. The processor 701 may be an integrated circuit chip with signal processing capabilities. In some embodiments, the steps of the foregoing methods can be completed by an integrated logic circuit in the form of hardware or by instructions in the form of software in the processor 701. The processor 701 may be a general-purpose processor, a digital signal processor (DSP), or other programmable logic devices, discrete gates or transistor logic devices, discrete hardware components, or the like. The processor 701 may be configured to implement or execute the methods, steps, and block diagrams disclosed in some embodiments of the application. The general-purpose processor may be a microprocessor or any conventional processor or the like. Combining the steps of the method disclosed in some embodiments of the application, they may be directly executed and completed by a hardware decoding processor, or executed and completed by a combination of hardware and software modules in the decoding processor. Software modules may be located in a storage medium, and the storage medium may be located in the memory 702. The processor 701 reads the information in the memory 702 and implements the steps of the foregoing methods in combination with its hardware.

In some embodiments, the electronic device 700 may be achieved by one or more of application specific integrated circuits (ASIC), DSP, programmable logic device (PLD), complex PLD (CPLD), FPGA, general-purpose processor, controller, MCU, MPU, or other electronic components, so as to implement the foregoing methods.

This application is described with reference to flow charts and/or block diagrams of methods, devices (systems), and computer program products according to some embodiments of the application. It should be understood that each process and/or block in the flowchart and/or block diagram, and the combination of processes and/or blocks in the flowchart and/or block diagram may be realized by computer program instructions. These computer program instructions may be provided to the processor of a general-purpose computer, a special-purpose computer, an embedded processing device, or other programmable data processing device, thereby generating a machine, so that the instructions executed by the processor of the computer or other programmable data processing device are used for generating an apparatus for implementing the functions specified in one or more processes in the flowchart and/or one or more blocks in the block diagram.

These computer program instructions may also be stored in a computer-readable memory that guides a computer or other programmable data processing device to work in a specific manner, thereby causing the instructions stored in the computer-readable memory to generate a manufactured article including an instruction device. The instruction device is configured to implement the functions specified in one or more processes in the flowchart and/or one or more blocks in the block diagram.

These computer program instructions may also be loaded on a computer or other programmable data processing device, so that a series of operation steps are implemented on the computer or other programmable device to produce computer-implemented processing, thereby enabling the instructions executed on the computer or other programmable device to implement the functions specified in one or more processes in the flowchart and/or one or more blocks in the block diagram.

It should be understood that the terms "system" and "network" according to some embodiments of the application are often used interchangeably herein. The term "and/or" according to some embodiments of the application is merely an association relationship describing associated objects, which means that there may be three types of relationships. For example, A and/or B can mean that there is A alone, or both A and B exist, or there is B alone. In addition, the character "/" according to some embodiments of the application generally indicates that the associated objects before and after are in an "or" relationship.

Some embodiments of the application are described above and not used to limit the protection scope of the application. Any modification, equivalent replacement and improvement made within the spirit and principle of the application should fall within the protection scope of the application.

## Claims

1. A method for training a machine learning model, comprising:
sending, by a first node, first indication information, wherein the first indication information is used by a second node for determining a first quantization strategy, and the first quantization strategy is used for determining a parameter and/or an output result of the machine learning model.

2. The method as claimed in claim 1, further comprising:
sending, by the first node, second indication information, wherein the second indication information is used for determining a first parameter corresponding to the first quantization strategy.

3. The method as claimed in claim 2, wherein the first parameter comprises at least one of:
a quantization range;
a quantization level;
a quantization bit number; and
a quantization base number and of a non-uniform power quantization.

4. The method as claimed in claim 2 or 3, wherein the second indication information is carried in any one of:
service layer data, a broadcast message, a radio resource control (RRC) message, a media access control (MAC) control element (CE), a physical downlink control channel (PDCCH) and a downlink control information (DCI).

5. The method as claimed in claim 1, wherein a first parameter corresponding to the first quantization strategy is defined in a protocol; or
the first parameter corresponding to the first quantization strategy is pre-configured.

6. The method as claimed in any one of claims 1 to 5, wherein the first quantization strategy comprises a uniform quantization strategy or a non-uniform quantization strategy.

7. The method as claimed in any one of claims 1 to 6, wherein the first quantization strategy is predefined; or
the first quantization strategy is pre-configured.

8. The method as claimed in any one of claims 1 to 7, wherein the first indication information is carried in any one of:
service layer data, a broadcast message, an RRC message, a MAC CE, a PDCCH and a DCI.

9. The method as claimed in any one of claims 1 to 8, wherein the first node comprises a terminal device or a network device.

10. The method as claimed in any one of claims 1 to 9, wherein the second node comprises a terminal device or a network device.

11. A method for training a machine learning model, comprising:
receiving, by a second node, first indication information; and
determining, by the second node, a first quantization strategy according to the first indication information, wherein the first quantization strategy is used by the second node for determining a parameter and/or an output result of the machine learning model.

12. The method as claimed in claim 11, further comprising:
receiving, by the second node, second indication information, wherein the second indication information is used by the second node for determining a first parameter corresponding to the first quantization strategy.

13. The method as claimed in claim 12, wherein the first parameter comprises at least one of:
a quantization range;
a quantization level;
a quantization bit number; and
a quantization base number and of a non-uniform power quantization.

14. The method as claimed in claim 12 or 13, wherein the second indication information is carried in any one of:
service layer data, a broadcast message, a radio resource control (RRC) message, a media access control (MAC) control element (CE), a physical downlink control channel (PDCCH) and a downlink control information (DCI).

15. The method as claimed in claim 11, further comprising:
determining, by the second node, the first parameter corresponding to the first quantization strategy according to a correspondence between a quantization strategy and the first parameter.

16. The method as claimed in claim 15, wherein the correspondence between the quantization strategy and the first parameter is defined in a protocol; or
the correspondence between the quantization strategy and the first parameter is pre-configured.

17. The method as claimed in any one of claims 11 to 16, wherein the first quantization strategy comprises a uniform quantization strategy or a non-uniform quantization strategy.

18. The method as claimed in any one of claims 11 to 17, wherein the first quantization strategy is predefined; or
the first quantization strategy is pre-configured.

19. The method as claimed in any one of claims 11 to 18, wherein the first indication information is carried in any one of:
service layer data, a broadcast message, an RRC message, a MAC CE, a PDCCH and a DCI.

20. The method as claimed in any one of claims 11 to 19, wherein the first node comprises a terminal device or a network device.

21. The method as claimed in any one of claims 11 to 20, wherein the second node comprises a terminal device or a network device.

22. A first node, comprising:
a first sending unit, configured to send first indication information, wherein the first indication information is used by a second node for determining a first quantization strategy, and the first quantization strategy is used for determining a parameter and/or an output result of the machine learning model.

23. The first node as claimed in claim 22, wherein the first sending unit is further configured to send second indication information, and the second indication information is used for determining a first parameter corresponding to the first quantization strategy.

24. The first node as claimed in claim 23, wherein the first parameter comprises at least one of:
a quantization range;
a quantization level;
a quantization bit number; and
a quantization base number and of a non-uniform power quantization.

25. The first node as claimed in claim 23 or 24, wherein the second indication information is carried in any one of:
service layer data, a broadcast message, a radio resource control (RRC) message, a media access control (MAC) control element (CE), a physical downlink control channel (PDCCH) and a downlink control information (DCI).

26. The first node as claimed in claim 22, wherein a first parameter corresponding to the first quantization strategy is defined in a protocol; or
the first parameter corresponding to the first quantization strategy is pre-configured.

27. The first node as claimed in any one of claims 22 to 26, wherein the first quantization strategy comprises a uniform quantization strategy or a non-uniform quantization strategy.

28. The first node as claimed in any one of claims 22 to 27, wherein the first quantization strategy is predefined; or
the first quantization strategy is pre-configured.

29. The first node as claimed in any one of claims 22 to 28, wherein the first indication information is carried in any one of:
service layer data, a broadcast message, an RRC message, a MAC CE, a PDCCH and a DCI.

30. The first node as claimed in any one of claims 22 to 29, wherein the first node comprises a terminal device or a network device.

31. The first node as claimed in any one of claims 22 to 30, wherein the second node comprises a terminal device or a network device.

32. A second node, comprising:
a first receiving unit, configured to receive first indication information; and
a processing unit, configured to determine a first quantization strategy according to the first indication information, wherein the first quantization strategy is used by the second node for determining a parameter and/or an output result of the machine learning model.

33. The second node as claimed in claim 32, wherein the first receiving unit is further configured to receive second indication information, wherein the second indication information is used by the second node for determining a first parameter corresponding to the first quantization strategy.

34. The second node as claimed in claim 33, wherein the first parameter comprises at least one of:
a quantization range;
a quantization level;
a quantization bit number; and
a quantization base number and of a non-uniform power quantization.

35. The second node as claimed in claim 33 or 34, wherein the second indication information is carried in any one of:
service layer data, a broadcast message, a radio resource control (RRC) message, a media access control (MAC) control element (CE), a physical downlink control channel (PDCCH) and a downlink control information (DCI).

36. The second node as claimed in claim 32, wherein the processing unit is further configured to determine the first parameter corresponding to the first quantization strategy according to a correspondence between a quantization strategy and the first parameter.

37. The second node as claimed in claim 36, wherein the correspondence between the quantization strategy and the first parameter is defined in a protocol; or
the correspondence between the quantization strategy and the first parameter is pre-configured.

38. The second node as claimed in any one of claims 32 to 37, wherein the first quantization strategy comprises a uniform quantization strategy or a non-uniform quantization strategy.

39. The second node as claimed in any one of claims 32 to 38, wherein the first quantization strategy is predefined; or
the first quantization strategy is pre-configured.

40. The second node as claimed in any one of claims 32 to 39, wherein the first indication information is carried in any one of:
service layer data, a broadcast message, an RRC message, a MAC CE, a PDCCH and a DCI.

41. The second node as claimed in any one of claims 32 to 40, wherein the first node comprises a terminal device or a network device.

42. The second node as claimed in any one of claims 32 to 41, wherein the second node comprises a terminal device or a network device.

43. A terminal device, comprising a processor and a memory configured to store a computer program executable on the processor, wherein,
the processor is configured to, when executing the computer program, implement steps of the method for training the machine learning model as claimed in any one of claims 1 to 10.

44. A network device, comprising a processor and a memory configured to store a computer program executable on the processor, wherein,
the processor is configured to, when executing the computer program, implement steps of the method for training the machine learning model as claimed in any one of claims 11 to 21.

45. A storage medium storing an executable program, wherein the executable program, when being executed by a processor, is used for implementing the method for training the machine learning model as claimed in any one of claims 1 to 10.

46. A storage medium storing an executable program, wherein the executable program, when being executed by a processor, is used for implementing the method for training the machine learning model as claimed in any one of claims 11 to 21.

47. A computer program product, comprising computer program instructions that cause a computer to implement the method for training the machine learning model as claimed in any one of claims 1 to 10.

48. A computer program product, comprising computer program instructions that cause a computer to implement the method for training the machine learning model as claimed in any one of claims 11 to 21.

49. A computer program, causing a computer to implement the method for training the machine learning model as claimed in any one of claims 1 to 10.

50. A computer program, causing a computer to implement the method for training the machine learning model as claimed in any one of claims 11 to 21.

51. A chip, comprising: a processor, configured to call and run a computer program from a memory, causing a device installed with the chip to implement the method for training the machine learning model as claimed in any one of claims 1 to 10.

52. A chip, comprising: a processor, configured to call and run a computer program from a memory, causing a device installed with the chip to implement the method for training the machine learning model as claimed in any one of claims 11 to 21.
